# EUROPEAN PATENT SPECIFICATION

(11) **EP 3 816 880 B1**
(45) Date of publication and mention of the grant of the patent: **03.07.2024**
(21) Application number: 20204736.1
(22) Date of filing: 29.10.2020
(51) Int. Cl.: G06N 20/20, G06F 17/18, G06V 20/10, G06F 18/214

(54) **A YIELD ESTIMATION METHOD FOR ARABLE CROPS AND GRASSLANDS, COPING WITH EXTREME WEATHER CONDITIONS AND WITH LIMITED REFERENCE DATA REQUIREMENTS**
VERFAHREN ZUR ERTRAGSSCHÄTZUNG FÜR ACKERBAUKULTUREN UND GRASLAND, DAS EXTREME WETTERBEDINGUNGEN UND BEGRENZTE REFERENZDATENANFORDERUNGEN BEWÄLTIGT
PROCÉDÉ D'ESTIMATION DE RENDEMENT DE CULTURES ET DE PRAIRIES ARABLES FAISANT FACE À DES CONDITIONS MÉTÉOROLOGIQUES EXTRÊMES ET AYANT DES EXIGENCES LIMITÉES EN MATIÈRE DE DONNÉES DE RÉFÉRENCE

(30) Priority: 04.11.2019 EP 19206944
(43) Date of publication of application: 05.05.2021
(73) Proprietor: Gaf AG, 80634 Munich (DE)
(72) Inventor: AYANU, Yohannes, 86163 Augsburg (DE); KÖHLER, Christian, 82110 Germering (DE)
(74) Representative: Maiwald GmbH

(56) References cited:
- Pudis Ondrej Karel: "Satellite Image Analysis for Crop Yield Prediction", Bachelor's Thesis, 28 October 2018 (2018-10-28), pages 1-95, XP055788602, Prague Retrieved from the Internet: URL:https://dspace.cvut.cz/bitstream/handl e/10467/83149/F8-BP-2019-Pudis-Ondrej-thes is.pdf?sequence=-1&isAllowed=y [retrieved on 2021-03-22]
- SAEED KHAKI ET AL: "Crop Yield Prediction Using Deep Neural Networks", ARXIV.ORG, CORNELL UNIVERSITY LIBRARY, 201 OLIN LIBRARY CORNELL UNIVERSITY ITHACA, NY 14853, 7 February 2019 (2019-02-07), XP081026669,
- TERLIKSIZ ANIL SUAT ET AL: "Use Of Deep Neural Networks For Crop Yield Prediction: A Case Study Of Soybean Yield in Lauderdale County, Alabama, USA", 2019 8TH INTERNATIONAL CONFERENCE ON AGRO-GEOINFORMATICS (AGRO-GEOINFORMATICS), IEEE, 16 July 2019 (2019-07-16), pages 1-4, XP033610867, DOI: 10.1109/AGRO-GEOINFORMATICS.2019.8820257 [retrieved on 2019-08-29]
- Medar Ramesh A. ET AL: "Sugarcane Crop Yield Forecasting Model Using Supervised Machine Learning", INTERNATIONAL JOURNAL OF INTELLIGENT SYSTEMS AND APPLICATIONS, vol. 11, no. 8, 8 August 2019 (2019-08-08) , pages 11-20, XP055967806, ISSN: 2074-904X, DOI: 10.5815/ijisa.2019.08.02 Retrieved from the Internet: URL:https://content.meteoblue.com/en/resea rch-development/cooperation-results/obj-1. pdf>
- KOUNALAKIS TSAMPIKOS ET AL: "Deep learning-based visual recognition of rumex for robotic precision farming", COMPUTERS AND ELECTRONICS IN AGRICULTURE, ELSEVIER, AMSTERDAM, NL, vol. 165, 29 August 2019 (2019-08-29), XP085810720, ISSN: 0168-1699, DOI: 10.1016/J.COMPAG.2019.104973 [retrieved on 2019-08-29]

## Description

### Field of the Invention

The invention relates to the field of yield estimations based on Remote Sensing and/or Geoinformation Systems. The invention particularly relates to a method for determining a yield estimation of crops of a field. The invention further relates to a system for determining a yield estimation of crops, to a use, to a program element, and to a computer-readable storage medium.

### Background

In prior art, two major categories of approaches for crop and grassland yield estimation have been provided: model-driven and data-driven approaches; see, for instance, "Chen, X., Cournède, P. H.: Model-Driven and Data-Driven Approaches for Crop Yield Prediction: Analysis and Comparison. In Proceedings of 19th International Conference on Computational Statistics and Data Analysis (ICCSDA2017), 2017."

The model-driven approaches are based on simulation of the dynamics of crop/grass growth in response to interaction of plants with dynamics in the environment. These mechanistic modelling approaches, which are conventionally referred to as process-based models, have been commonly used for crop and grassland yield estimation. The models are driven by certain processes that can usually be described by a set of mathematical equations between crop/grassland yield and its influential variables. In such cases the mathematical equations are predefined irrespective of the nature of the data. The variables used for modelling are also predefined and the corresponding data should be available to be able to run the models. Thus, calibration of the models requires parameterizing complex, multidimensional and dynamic biophysical processes determining crop/grass growth. These models are based on a number of priori assumptions about the data generating systems and the data should be collected with a carefully controlled experimental design. Due to this demanding phase in the crop and grassland yield estimation, these models are often cost-inefficient and are applicable only at small spatial scale where intensive follow up of crop/grass growth in response to the dynamic biophysical processes is possible. Hence, a model developed for a particular location and crop/grassland type may not be replicable or scalable to other areas.

The data-driven approaches are based on analysis of the data to find relationships between crop/grassland yield and relevant variables without explicit knowledge of the dynamics in biophysical processes that determine crop/grass growth. The classical statistical models (e.g. linear regression) are widely used data-driven approaches for crop/grassland yield estimation. Statistical models primarily focus on inference based on samples that involves creation and fitting of a project-specific probability model. These classical models are designed for data with a few dozen input variables and small to moderate sample sizes and the model is expected to fill in the unobserved aspects. However, as the number of input variables and interactions among them increases, the model that captures these relationships becomes more complex and its precision declines. Therefore, statistical models are inefficient and deliver less accurate estimations in such cases where there is a need to include large number of variables for estimating crop/grassland yield. These models are primarily created for finding an easily interpretable significance of relationships between crop/grassland yield and relevant variables and may not deliver estimations with high accuracy.

The more advanced data-driven approaches are Machine Learning Algorithms (MLA) that are entirely based on learning from a training set of data to make estimation on unseen data. The developments in big data and high performance computing technologies contributed to the emergence of MLA, creating new opportunities in the data analytics for the data intensive multi-disciplinary agricultural technologies including crop/grassland yield estimation.

Unlike statistical models, MLA models are aimed at providing estimations and predictions with very high accuracy and can handle a very large number of variables and complex datasets. Contrary to the process-based models that require intensive calibration of the dynamic processes that affect crop/grass growth, MLA exploits the different aspects of scarcely available field measured data to deliver yield estimations with very high accuracy based on various types of indicators. A MLA does not rely on predefined mathematical equations but learn the relationship between the variables from the data itself to fit a suitable model.

Pertaining to the data-driven approaches, recent developments in the fields of Remote Sensing (RS) and Geoinformation Systems (GIS) enable capturing of spatially-explicit data at various spatio-temporal scales and provide opportunities to improve crop/grassland yield estimation. Various vegetation indices (e.g. Normalized Difference Vegetation Index - NDVI, Enhanced Vegetation Index - EVI) can be derived from RS data and used for modelling crop/grassland yield. In addition, derivatives of these indices (e.g. Vegetation Condition Index - VCI, Vegetation Health Index - VHI) can also be used for mapping catastrophic events like drought severity to be able to explain yield anomalies. Incorporating these indices in yield estimation could largely improve decision-making in the agricultural sector for instance, improving the effectiveness of insurance contracts. See, e.g. "R. Bokusheva et al.: Satellite-based vegetation health indices as a criterion for insuring against drought-related yield losses. Agricultural and Forest Meteorology, Volume 220, 2016, pages 200 - 206."

Supported with advancements in RS technologies, data on weather conditions (e.g. precipitation, temperature, duration of sunshine) and soil (e.g. soil properties and classes) are also becoming available at varying spatio-temporal scales globally. Hence, different indicators can be derived from weather related data and used for estimating crop/grassland production and failure due to hazards. Besides these, data on management practices and socio-economic factors are also available from different sources which can also be used for crop/grassland yield estimation.

Availability of such diverse sources of data for deriving indicators at large-scale could boost the accuracy of crop/grassland yield estimation if proper data-driven approaches are utilized. However, the level of development in application of data-driven methods in agricultural information systems is still in its infant stage and the potential of the state-of-the-art technologies like MLA is not yet well-exploited.

US2018/0211156A1 discloses a system and method for computing yield values through a neural network for agricultural fields using crop type, environmental and management practice data.

US2017/0161560A1 discloses a system and method based on supervised learning methods for predicting harvest yield for fruits and related crops using crop monitoring data such as images, videos and environmental sensor inputs.

Bachelor's thesis "Pudis, Ondrej: Satellite Image Analysis for Crop Yield Prediction. Prague, 28 October 2018" relates to a prediction pipeline to estimate a crop yield.

The paper "Medar, R.A.; et al.: Sugarcane Crop Yield Forecasting Model Using Supervised Machine Learning. International Journal of Intelligent Systems and Applications, Vol. 11, No. 8, 8 August 2019" relates to sugarcane yield forecasting.

The paper "Kounalakis, T.; et al.: Deep learning-based visual recognition of rumex for robotic precision farming. Computers And Electronics In Agriculture, Elsevier, Amsterdam, NL, Vol. 165, 29 August 2019" relates to weed visual recognition algorithms using deep learning.

Nevertheless, though there are some efforts recently, a robust, cost-efficient and scalable method which is flexible in terms of data requirements but delivers crop/grassland yield estimation with very high accuracy is not available so far.

### Description

It is an objective of the invention to provide an improved method for determining a yield estimation of crops of a field. This objective is achieved by the subject-matter of the independent claims. Further embodiments are evident from the dependent claims and the following description.

One aspect relates to a method for determining a yield estimation of crops of a field. The method comprises the steps of:
providing a plurality of processed data of the field, wherein each entry of the plurality of processed data comprises at least an identification of the field, a time-series of processed remote sensing data, and an observed yield value;
partitioning the plurality of processed data into an L1 trainset and an L1 testset, wherein the L1 trainset and the L1 testset comprise a disjoint subset of entries of the plurality of processed data;
training each L1 model of a plurality of L1 models based on the entries of the L1 trainset; outputting, for each trained L1 model, an L1 predicted yield value, based on the L1 trainset; comparing, for each L1 model, the L1 predicted yield values of the L1 trainset to the observed yield values;
selecting an L1 subset of L1 models of the plurality of L1 models, wherein the selected L1 subset consists of L1 models, whose L1 predicted yield values differ from the observed yield values by less than a predefined L1 error value;
training each L2 model of a plurality of L2 models based, as input, only on the L1 predicted yield values that are output by the selected L1 subset of L1 models;
determining, for each trained L2 model, an L2 predicted yield value, based on a second set of L1 predicted yield values, wherein the second set of L1 predicted yield values are output by the selected L1 subset of L1 models based on the L1 testset;
selecting an L2 subset of L2 models of the plurality of L2 models, wherein the selected L2 subset consists of L2 models, whose L2 predicted yield values differ from the observed yield values by less than a predefined L2 error value;
determining the yield estimation of crops of the field by applying the selected L1 subset of L1 models and the selected L2 subset of L2 models on a time-series of unseen processed remote sensing data of the field.

The yield estimation may result in an estimation of absolute or relative yield, e.g. in tons per square kilometre, in percentage related to a reference yield of a particular year or of an average of several years, etc. The kinds of crops this method is to applied to may comprise arable crops, such as wheat, rye, barley, colza, maize, soybean, rice, and/or grasslands. The field may be a predefined piece of land of an arbitrary size. Several field - e.g. of the same owner, the same type of crops, etc. - may be gathered or combined for an estimation. In one field, one single type of crops may be grown, or several types of crops.

Processed data of the field may be delivered from a database. The processed data may be derived from raw data, possibly after one or more processing steps. Each field is related to or "has" one entry of the plurality of processed data. Each entry of the plurality of processed data may comprise a list of data that characterise the field and its properties, for instance the yield of one or more years, and data the yield may be dependent of, e.g. humidity, sunshine, kind of soil, etc. Each field has a unique identification of the field, which may work as a key for this entry. The processed and/or the raw data may comprise a time-series of processed remote sensing data, for example data from Remote Sensing (RS) and/or Geoinformation Systems (GIS) and/or other types of data, possibly from multiple sources. The GIS may deliver data with different resolution, e.g. 10 m for Sentinel 2A satellites, 30 m for Lansat 8, or 250 m for MODIS satellites. The time-series may, e.g., comprise data in an equidistant time format, e.g. every year, month, etc. and/or with other distances. Some outliers, e.g. years with significant deviations - for instance years with low yield caused by drought, inundation, or other causes - may be skipped. The treatment of outliers may be done by algorithmic means and/or by experts.

The plurality of processed data is split into an L1 trainset and an L1 testset (or "validset"). The L1 trainset and the L1 testset comprise a disjoint subset of entries of the plurality of processed data, i.e. each entry of the plurality of processed data is either mapped to the L1 trainset or to the L1 testset. Some entries may not be mapped, i.e. neither to the L1 trainset nor to the L1 testset; these data may not be used for the further steps of the method. The partitioning ratio between the L1 trainset and the L1 testset may be specified by a user of the method. In cases when partitioning of data is not intended, the entire input data may be mapped to the L1 trainset, i.e. used for training the model. The L1 testset may, then, comprise separate independent input data available for crop yield estimation, e.g. data of the recent harvest period.

The data of the of the L1 trainset may, then, be used for training so-called "L1 models". The L1 models may be a plurality of L1 models, which may have been found advantageous for yield estimation of crops, e.g. by a series of studies. The L1 trainset may be used for training each L1 model of this plurality of L1 models, in a first training stage. The training of each L1 model may be performed until a predefined stop criterion is met, for instance a predefined number of runs, a predefined convergence, and/or another stop criterion.

After having performed this first training stage, based on the L1 trainset, for each trained L1 model an L1 predicted yield value or L1 prediction is output. The L1 predicted yield value may be one or more numbers, it may represent an absolute or relative yield of each field. The L1 predicted yield value may be collected from several training runs of the L1 models. The number of training runs may be 1, 3, 5, 9, 15 and/or another number of runs. The L1 predicted yield values of the different training runs may differ. This difference may, e.g., be caused by selecting different hyperparameters (i.e. steering or control parameters) and/or different seed-values for each training run. Then, for each L1 model, the L1 predicted yield values of the L1 trainset to the observed yield values are compared.

Based on this comparison, an L1 subset of L1 models of the plurality of L1 models is selected. The selected L1 subset consists of L1 models, whose L1 predicted yield values differ from the observed yield values by less than a predefined L1 error value. The selected L1 subset may comprise the best-performing L1 models for this kind of evaluation. The selected L1 subset consists at least of two L1 models. The error value may be an absolute or an relative value. The performance - and/or the model accuracy - of the trained L1 models may be evaluated using metrics like RMSE (Root Mean Square Error), R² (Rsquared), MAE (Mean Absolute Error), and/or further metrics. These measures for Each of the L1 models may be evaluated separately for their performance by resampling the data and implementing methods such as Bootstrapping, K-fold Cross-Validation and Repeated K-fold Cross-Validation. L1 models, whose L1 predicted yield values are worse than the predefined L1 error value may be discarded. For the sake of an example, the number of L1 models used for the training may be 15 MLA models, the L1 subset may consist of three MLA models. The L1 models and/or L2 models may be trained by resampling the used trainset data and using methods like Bootstrapping and/or K-Fold Cross-Validation and/or Repeated K-fold Cross-Validation and/or Leave-One-Out Cross-Validation.

The L1 predicted yield values of the selected L1 subset - e.g. "best-performing" L1 models - can, then, be used as only input for training each L2 model of a plurality of L2 models, in a second training stage. As training criterion, the observed yield may be maintained. At least some of the L2 models may be the same MLA models as used for the first training stage (i.e. as L1 models) and/or may be different ones. The MLA models may be selected by a user and/or may be selected by an automated means, e.g. based on long-term experience, studies on correlations of the models, and/or other considerations.

After having trained the L1 models and the L2 models, based on the L1 trainset, these (cascaded) selected subset of L1 models and all the L2 models are applied the L1 testset. Then, a second set of L1 predicted yield values is output by the selected subset of L1 models (in other words, the selected L1 subset of L1 models). Afterwards, for each trained L2 model, an L2 predicted yield value is determined, based on this second set of L1 predicted yield values.

Then, an L2 subset of L2 models of the plurality of L2 models is selected. The selected L2 subset consists of L2 models, whose L2 predicted yield values differ from the observed yield values by less than a predefined L2 error value. The selected L2 subset consists of at least one L2 model. The predefined L2 error value provides an accuracy and/or performance estimation for the L2 models. For the model accuracy estimation, one or more methods may be used; examples may comprise cv, repeated-cv, bootstrap, optimism_boot, boot632, LOOCV, LGOCV, timeslice, adaptive_boot, adaptive_LGOCV, and/or further methods. Each of these methods may involve resampling and reusing the data to produce more accurate results while training the MLA models. Several resampling methods may be used, e.g., Repeated K-fold Cross Validation, Bootstrapping, and/or leave-one-out cross-validation. For each method used, model accuracy evaluation metrics may be computed during the training process. The preferred method may be selected by a user and/or by automated means, e.g. a method that suits best for the data and/or the training process.

After having trained the MLA models and having selected the best-suited ones, the yield estimation of crops of the field is performed by applying the selected L1 subset of L1 models and the selected L2 subset of L2 models on a time-series of unseen - i.e. "new" - processed remote sensing data of the field. Thus, the yield estimation of crops of the field can be determined.

As an alternative, the time-series of unseen processed remote sensing data of the field may be applied either only to the selected L1 subset of L1 models or only the selected L2 subset of L2 models. This alternative may be used based on an expertise of skilled persons that are familiar both with the models, the setting of hyperparameters, and the features of the input data and the nature of the fields in the real world.

This method turned out not only to cope with a plethora of crop-types, but also with many types of landscapes, soils, climates, and/or further yield-influencing factors. The method is advantageously not only less time-consuming for a user than other methods known, but can also be applied to the crops without a complex and/or expensive botanical model. Furthermore, the method may be applicable not only to a broad range of plants and conditions the plants are grown, but may also be able to cope with extreme weather conditions. Experiments showed an excellent applicability to many regions of the earth and provided a sound basis for a prognosis of yield estimation and related tasks like harvest planning, insurance cost, long-term deviations, and further evaluations. Generally, the method turned out to be useful even for analyses with limited reference data requirements as a basis for performing the method.

In various embodiments, the L1 predicted yield values differ from L1 predicted yield values of each of the other L1 models by at least a predefined difference value. The predefined difference value may express a kind of "correlation" among the models for the considered set of L1 training runs. Thus, kind of "redundant", "similar" and/or "highly correlated" models and/or predictions - which may less contribute to an input of the L2 models - may be sorted out. (Note that the notions in quotation marks are used in an analogous way, only for a clear understanding.) This advantageously provides an additional approach for selecting the "best-performing" L1 subset of L1 models. This may lead to a significant quality improvement of the yield estimation.

In various embodiments, statistical measures such as RMSE (Root Mean Square Error), R² (Rsquared), MAE (Mean Absolute Error), and/or further metrics are used as evaluation metrics or evaluating metrics for determining the differences for the L1 error value, the L2 error value, and/or the difference value. These statistical measures turned out be well-suited for evaluation the quality of the MLA models and/or their results, for a concrete set of training-runs.

In various embodiments, the method further comprises the step of validating the yield estimation of crops of the field, by applying the selected L1 subset of L1 models and the selected L2 subset of L2 models on a time-series of unseen processed reference data of the field. This may include a comparing step, and/or other validation steps. The unseen processed reference data may be provided by a client, for instance based on an earlier harvest of the current year. To get the unseen processed reference data may include to process - as described above and/or below - unseen data from the client. This may advantageously contribute to increase the reliability and/or the acceptance of the results of the method as described above and/or below.

In various embodiments, the time-series of processed remote sensing data comprises data from remote sensing data, particularly from NDVI, OSAVI, ARVI, CVI, DVI, and/or further data from optical satellites, from radar satellites, and/or from air-borne sensors. Said data may come directly from those data and/or may be derived (and/or processed otherwise) from them.

In various embodiments, the plurality of processed data of the field further comprises at least one of: a crop variety, a corresponding time-series of processed weather data, processed soil data, management practices, socio-economic factors, data on damage factors, and/or further data.

The a crop variety, may comprise crop type - e.g. wheat, rye, rice, grass, or a mixture of several crop types and/or for specific crops or multiple crops simultaneously - and genetic makeup, resistance to lodging, drought, flood and salinity tolerance. The mixture or simultaneously growing of several crop types may lead to a less detailed and/or less accurate result.

The corresponding time-series of processed weather data may comprise weather conditions, such as temperature, precipitation, solar radiation, evapo-transpiration, sunshine duration, frost, atmospheric humidity, wind velocity, micro-climate data. "Corresponding" means a correspondence or other (e.g. time) relation to other data, e.g. to satellite data.

The processed soil data may comprise soil properties and classes, like soil texture, bulk density, salinity, soil temperature, and/or soil moisture.

The management practices may comprise tillage, the sowing/planting methods (e.g. row, nest, or wide-row), crop rotation, herbicide application, pesticide application, chemical fertilizers, and manure application, irrigation scheduling, and/or mulching.

The socio-economic factors may comprise land tenancy, system of ownership, level of mechanization and equipment, transportation facilities, marketing facilities, irrigation facilities, government plans and/or international policies.

The data on damage factors may comprise extreme crop-stress, drought, flood, pest, disease. The further data may comprise vegetation indices (e.g. Normalized Difference Vegetation Index - NDVI, Enhanced Vegetation Index - EVI), and/or derivatives of these indices (e.g. Vegetation Condition Index- VCI, Vegetation Health Index- VHI). Note that at least some of these processed data may, additionally or as an alternative, also be used for mapping catastrophic events like drought severity to be able to explain anomalies in crop yield.

In various embodiments, the plurality of L1 models and/or the plurality of L2 models comprises at least two of: RF (Random Forest model), GBM (Gradient Boosting Machines), mxnet (MXNet Gluon models), SVM (Support Vector Machine), cubist (tool for generating rule-based predictive models), PLS (Partial Least Squares), SIMPLS (Simple Partial Least Squares), rpart ( Recursive Partitioning and Regression Trees), nnet (Neural Networks Using the R nnet Package), LASSO (shrinkage and selection method for linear regression), glmboost (linear model fitted using a boosting algorithm based on component-wise univariate linear models), glm (generalized linear model is a flexible generalization of ordinary linear regression, multivariate linear model), xgboost (gradient boosted decision trees), and/or a further machine learning model. For L1 models and L2 models, the same and/or different MLA model types may be used.

In various embodiments, the training of at least one L1 model and/or the training of at least one L2 model comprises a hyperparameter tuning. This may be performed before and/or during the training. The default values for the MLA models have been defined after intensive testing using different crops. In long-term experimental runs, such default values have been defined for more than 100 MLA models. These default values may be used for an initial training of the MLA models. Some of the MLA may share at least a few and/or some common hyperparameters. Grids of hyperparameters may be defined for each of the MLA models.

In various embodiments, the training of at least one L1 model and/or the training of at least one L2 model comprises to fulfil a stopping criterion for stopping the training, wherein the stopping criterion is one of: having executed a predefined number of runs, reaching of minimal convergence, and/or reaching of minimal threshold of an error value. The error value may be computed, e.g., by using RMSE, R², MAE, and/or other evaluation means. These embodiments provide advantageously some flexibility for controlling the time to be used for gaining a desired and/or specified quality of the yield estimation.

In various embodiments, the method further comprises the step of processing a plurality of raw data of a field for generating a plurality of processed data of the field, wherein the step comprises:
providing the plurality of raw data of the field, which comprise at least one of: a time-series of raw remote sensing data from at least one satellite and/or airplane, wherein the time-series comprises remote sensing data of at least one fertilization period, a time-series of corresponding raw weather data, a list of at least one raw management practice, a list of at least one raw soil data, a list of at least one raw socio-economic factor, a list of at least one raw vegetation index, and/or a list of at least one raw derivative of vegetation indices;
cleaning the raw data;
mapping the raw data to the field and the time-series;
transforming the raw data into a predefined format of the processed data.

The raw data of the time-series of raw remote sensing data may come from:
- medium resolution multi-spectral imagery such as Landsat 8, Sentinel-2, SPOT-5, ASTER, RapidEye;
- high resolution or very high resolution multi-spectral imagery such as I KONOS, Pléiades, QuickBird, WorldView, GeoEye, SPOT-7;
- data from radar satellite constellation, for example Sentinel-1's C-band SAR active sensor;
- data from air-borne sensors, e.g. multi-spectral sensors mounted on air-borne systems; and/or
- further satellites and/or airplanes.

Weather data - e.g. temperature, precipitation, duration of sunshine and evapotranspiration - may comprise micro-climate data. Cleaning the raw data may comprise, e.g.: getting rid of not-plausible data; detection and removal of no-data values, outliers, near-zero variables and/or variables with zero or near-zero variance; and/or detecting and removing raw data outliers. Transforming the raw data into a predefined format of the processed data may comprise normalization and/or transformation of the data.

The processing advantageously makes the method as described above and/or below applicable to a broad range of input data. In addition, this provides a basis for using also different datasets upon availability, without pre-requirement for specific datasets and contents. Generally, the method turned out to be useful even for analyses with limited reference data requirements as a basis for performing the method.

An aspect relates to a method for training an L1 model, and/or of training each L1 model of a plurality of L1 models based on the entries of the L1 trainset. The method comprises the steps of:
providing a plurality of processed data of a field, wherein the plurality of processed data comprises at least: an identification of the field, a time-series of processed remote sensing data, and a plurality of observed yield data;
pre-processing the L1 model;
training the L1 model with the plurality of processed data as an input;
outputting a first yield estimation of crops of the field;
determining a first accuracy estimation of the first yield estimation, by comparing the first yield estimation with the observed yield data of the field; and
repeating the above steps until a stopping criterion is met.
The stopping and/or other predefined criterion may comprise e.g. accuracy and/or convergence criteria.

An aspect relates to a program element for executing the method as described above and/or below, when running the program element on a processing unit.

An aspect relates to a computer-readable storage medium where a computer program or a computer program product as described above is stored on.

An aspect relates to a system for determining a yield estimation of crops of a field. The system comprises:
a database comprising a plurality of raw data and/or a plurality of processed data, and
a processing unit for processing the plurality of raw data and/or a plurality of processed data,
and for controlling, running and/or evaluating a plurality of L1 models and/or L2 models as described above and/or below.

An aspect relates to a use of a system as described above and/or below or a method as described above and/or below for determining a yield estimation of crops of a field, particularly of historical and current yield estimation of crops of the field, wherein the crops comprise arable crops, such as wheat, rye, barley, colza, maize, soybean, rice, and/or grasslands. Due to the features described above and/or below, the system and/or the method may be applicable not only to a broad range of plants and conditions the plants are grown, but may also be able to cope with extreme weather conditions and with limited reference data requirements as a basis for performing the method.

An aspect relates to a method of yield estimation for arable crops and/or grasslands. This method comprises following steps:
- receiving multiple datasets from one or more data sources wherein said received datasets include data being relevant for the crop/grassland and/or crop/grassland yield, in particular on a spatio-temporal scale, and pre- processing the received multiple datasets to generate trainset and testset data,
- training at least two different Level One Machine Learning Algorithm models (L1 MLA) selected from a database providing different L1 MLA models with the trainset data,
- training of Level Two Machine Algorithm (L2 MLA) models selected from a database providing different L2 MLA models by using prediction datasets generated by at least some of the trained Level One Machine Learning Algorithm (L1 MLA) models based on input trainset data,
- selecting at least one trained Level Two Machine Learning Algorithm model (L2 MLA model) for subsequent prediction of crop yield on unseen datasets.

In an embodiment, the received multiple datasets refer to different type of data, in particular numeric and categorical data, and wherein the datasets can be obtained from different data sources including at least one of indices derived from remote sensing data such as NDVI, OSAVI, ARVI, CVI and DVI, and/or at least one of meteorological data such as temperature, precipitation, duration of sunshine and evapotranspiration, and/or drought indicators and/or information on farming management practices.

In an embodiment, the automated exploration and/or analysis of the received multiple datasets is performed in order to evaluate the individual impact of the different datasets on the crop/grassland yield estimation, wherein exploration and/or analysis of datasets includes generation of an overview by calculation of descriptive statistics from the received datasets and/or generation of pairwise correlation matrices in order to identify relationships between predictors and the response, i.e. crop/grassland yield.

In an embodiment, the pre-processing of received datasets involves normalization and/or transformation of the received datasets and/or detection of nodata values and/or outliers and/or near-zero variables included in the received datasets in combination with appropriate treatment of said detected variable and outliers.

In an embodiment, the pre-processing of the received datasets further includes detecting categorical variables included in the received datasets and creating new dummy variables representing said categorical variables to be used by the L1 and/or L2 MLA models.

In an embodiment, the hyperparameter tuning is performed for the L1 MLA models before model training.

In an embodiment, a limited number of the trained L1 MLA models is selected based on evaluation metrics calculated for the trained L1 MLA models wherein only prediction datasets generated by the selected L1 MLA models are used for subsequent training of L2 MLA models.

In an embodiment, the selection of at least one trained L2 MLA model is based on evaluation metrics calculated for each trained L2 MLA models providing prediction results on testset data wherein preferably said testset data is generated by partitioning the received multiple datasets into trainset and testset data.

In an embodiment, statistical measures such as MAE, RMSE, R2, are automatically calculated und used as evaluation metrics for evaluating L1/L2 MLA models.

In an embodiment, L1 MLA models and/or L2 MLA models are trained by resampling the used trainset data and using methods like Bootstrapping and/or K-Fold Cross-Validation (CV) and/or Repeated K-fold Cross-Validation (repeated CV) and/or Leave- One-Out Cross-Validation (LOOCV).

In an embodiment, a user interface is provided enabling manual selection of L1/L2 MLA models and/or groups of L1/L2 MLA models to be used and/or manual configuration of hyperparameter and/or configuration on metric calculation for L1/L2 MLA models evaluation and/or configuration of sample size and/or resampling technique for training datasets and/or configuration of data pre-processing and/or data partitioning.

In an embodiment, the method is used for crop/grassland yield and yield loss estimation, wherein yield loss is estimated as a variation between current yield estimation and a reference yield, for instance based on a long term mean.

In an embodiment, the estimation of yield is performed for specific crops or multiple crops simultaneously and wherein preferable historical and current yield of crops can be estimated.

In an embodiment, the estimated yield loss is subsequently used for setting contractual basis for crop/grassland insurance.

An aspect relates to a system for crop/grassland yield estimation comprising an input interface for receiving multiple data sets from one or more data sources and at least one processing means for executing the method according to any of the preceding claims.

### Brief Description of the Drawings

**Fig. 1** shows the feature engineering steps involved for integrating data from different sources and preparation of trainset and testset data for the modelling.
**Fig. 2** displays the model engineering phase that includes steps involved in hyperparameter tuning, resampling and model evaluation for generating the level 1 models and creating trainset data for level 2 models.
**Fig. 3** illustrates the model engineering phase of the system for creating level 2 models and selecting the final metamodel to be used for estimating crop/grassland yield.
**Fig. 4** illustrates the steps involved in estimating crop/grassland yield using the selected final metamodel and unseen input data.
**Fig. 5** shows the steps involved in the validation of the yield estimation results using independent reference yield data.
**Fig. 6** shows the components/modules of the system for crop/grassland yield estimation.
**Fig. 7** shows a clipping of a plurality of processed data according to an embodiment.
**Fig. 8** shows a method according to an embodiment.

### Detailed Description of Embodiments

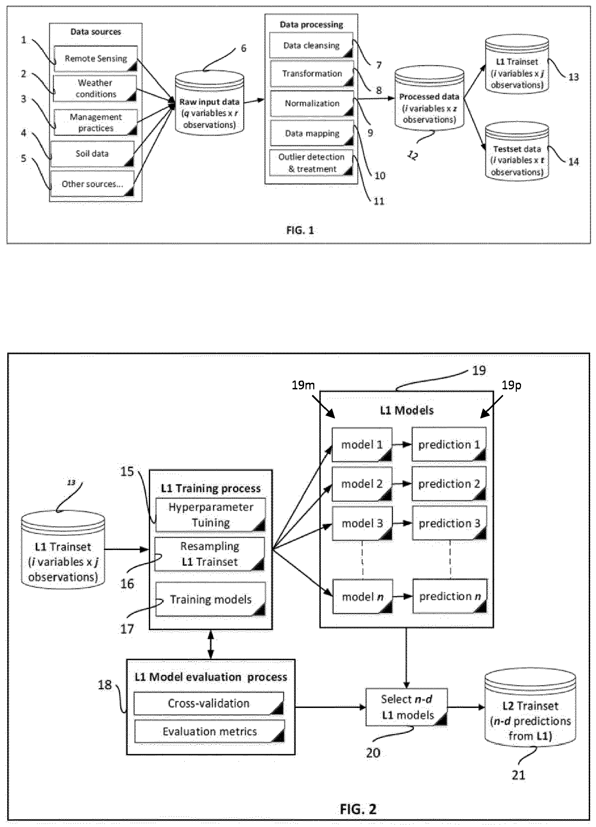

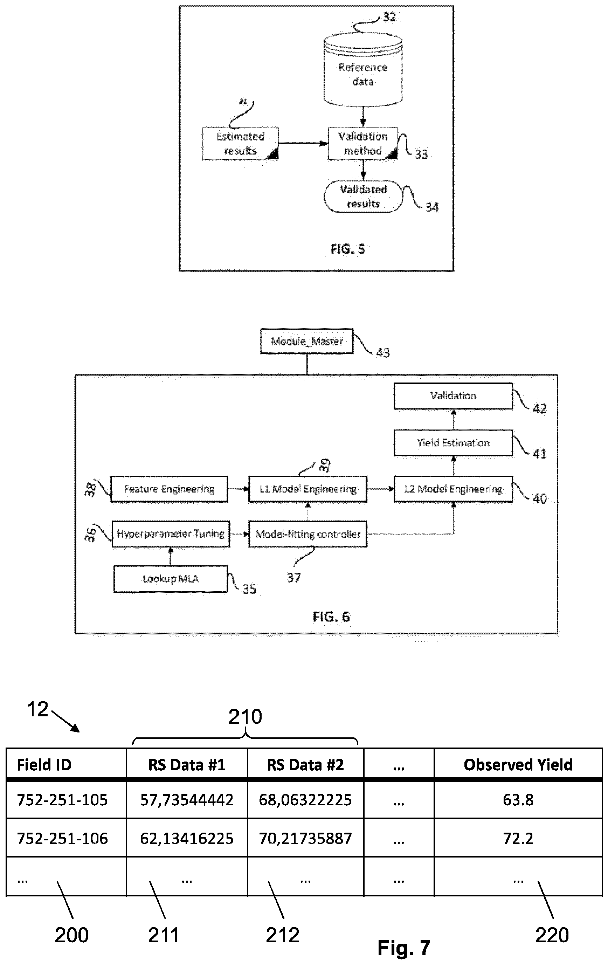

The disclosed method is organized and implemented in separate but inter-related modules **(****Fig. 6****)** comprising several embodiments presented in **Figs. 1 - 5**.

A list of all MLAs implemented in the model are included in the lookup module 35. The MLAs are grouped into different categories depending on their type and included as a list. Users can select the preferred group(s) containing list of MLAs and the preferred MLA group(s) can be specified in the module master in the system 43.

The module master 43 allows users to select the basic settings required to run the system based on the data and user's preferences. These include options for specifying: the model fitting type to use, MLA group(s) to be used in the modelling, MLA to be used as super-model to stack the trained MLA, the preferred pre-processing type, path to files & directories like input path, output path, file paths, path to output for data exploring step, paths to training and prediction and reference datasets sample size and resampling technique to use. In addition, the module 43 provides alternatives for selecting suitable processing steps depending on the data and user's preferences which include choosing whether or not to do manual hyperparameter tuning, pre-processing of data, data partitioning, remove near-zero-variables and drop outliers.

The list of hyperparameters and their default values as well as the corresponding MLA for which the hyperparameter tuning is required are integrated in hyperparameter tuning module 36. The module 36 for hyperparameter tuning is loaded only if the hyperparameter tuning is specified in the module master 43.

The feature engineering module 38 incorporates functionalities presented in **Fig. 1** in which input data are explored in detail and processed before using them in the modelling. Further details will be given at a later stage.

The L1 and L2 training processes are controlled using the module 37 designed for controlling model fitting based on the major required settings specified at the module master 43 and the hyperparameter tuning values specified in module 36.

The level 1 model engineering module 39 incorporates the different components illustrated in **Fig. 2** in which numerous MLA models are trained, evaluated and selected for use in L2 model engineering. The L1 Trainset data 13 is used for fitting the models. The fitted level 1 models 19 will be saved in a single file containing a list of L1 models.

The performance of the trained level 1 models is evaluated using metrics such as RMSE, MAE and R2 implemented in the L1 engineering module 39. Each of the MLA models is separately evaluated for their performance by resampling the data and implementing methods such as Bootstrapping, K-fold Cross-Validation and Repeated K-fold Cross-Validation. Statistical measures for evaluating the MLA models (e.g. MAE, RMSE, R2) are automatically calculated and used for the evaluation. The preferred models can be selected as input for level 2 model engineering module 40 or discarded based on results of the evaluation. Thus, based on the results of the model evaluation, MLA models can be excluded or included in the level 2 models based on the metrics.

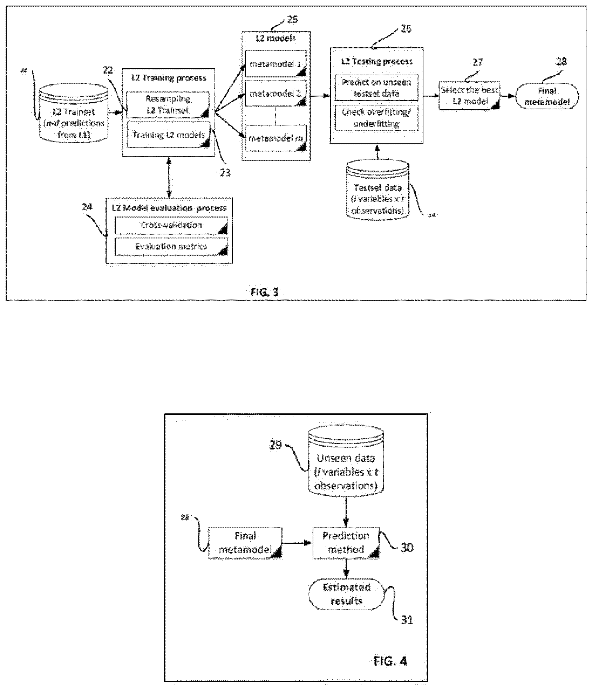

L2 model engineering module 40 consists of the components shown in **Fig. 3****.** The models selected after evaluation of their performance 21 are used to create level 2 models (metamodels) 25 that are the super - models combining many L1 models. In the Lookup module 35 several MLAs are provided as options for the L2 models 25 i.e. "super models/learners" to be trained in L2 training process. Hence, several metamodels 25 can be created in level 2 model engineering module 40 using prediction results from level 1 models (L1 MLA). Furthermore, the level 2 models 25 (L2 MLA or metamodels) are also evaluated using the evaluation metrics 24 to select the best metamodel 28 to be used for production i.e. prediction on independent unseen datasets. The major pitfalls in modelling, i.e. over-fitting and under-fitting are checked for each of the metamodels using the calculated metrics (e.g. RMSE values of the results derived from cross-validation step) based on results of predictions on testset data 26. The best metamodel is then selected based on the criteria that over-fitting and under-fitting are minimized so that the metamodel is able to generalize well on unseen data.

In the yield estimation module 41 the operational step in which the selected metamodel 28 is used for production i.e. predicting on unseen data to estimate crop/grassland yield is implemented. If pre-processing (e.g. scaling) was applied on the input data, the predicted final results will also have scaled values. In such cases, in an embodiment of module 41 the model outputs are rescaled to original data format.

In module master 43 several resampling methods are defined (e.g. K-fold Cross Validation (CV), Repeated K-fold Cross Validation (repeated-CV), Bootstrapping (Bootstrap) and The Leave-One-Out Cross-Validation (LOOCV). Each of these methods involves resampling and reusing the data in different model runs to produce more accurate results while training the MLA models. The preferred method is specified at 43 including sample size, number of cross-validation and repeats. For the selected method, model accuracy evaluation metrics (RMSE, MAE, R2) for level 1 and level 2 models are computed during the model engineering processes at 39 and 40.

The validation module 42 consists of a procedure for validating the estimated results as shown in **Fig. 5****.** Validation is realized only if reference yield data 32 is available. However, most often independent reference data 32 that can be used for validation are not available. To address this problem, the system integrates various resampling methods to evaluate the model performance during the training phase. Nevertheless, when there is available reference data, validation procedure based on metrics (RMSE, R2) is implemented in 42. The module for validation 42 is initialized only if reference data availability is confirmed by the user in the module master 43.

The modules 35-42 listed above are wrapped within the master module 43 from which they can be loaded to start the modelling process. Users are required to interact with the module master 43 only to do test runs to estimate crop/grassland yield. Nevertheless, other modules may have to be explored for more detailed understanding and application of the system. The input data preparation phase as performed by the feature engineering module 38 is explained in more detail in the following. The module 38 provides an option to generate an overview of the received data using methods implemented for calculation of descriptive statistics from the input data, visualizing and exporting the results as file (e.g. PDF, html and csv formats). Nodata (NA) values in the data are checked and replaced by interpolating from the input data in an automated process. In addition, outliers affect performance of the model and need to be detected, visualized and treated and/or removed. This involves automatic univariate and multivariate detection of outliers, extracting the most influential variables including their respective rows with outliers, treating or removing outliers and visualizing outliers using plots and exporting results as files (PDF, html, csv formats).

Further, pairwise correlation matrix may be generated and visualized. This enables to identify predictors that are correlated with the dependent variable (crop/grassland yield) as well as correlation between the predictors. The results are visualized with plots and exported as file (PDF format). Based on this result, some of the highly correlated variables can be removed to reduce the processing time during the yield estimation.

Further, the input data is pre-processed using preferred methods that include normalization 9, i.e. scale, centred or min-max methods, PCA and logarithmic transformation 8. In the system, options are provided as to whether to do pre-processing and to choose preferred type of pre-processing. A method for checking and mapping categorical data to the model is implemented in module 38. For direct use in the modelling, dummy variables are created from the categorical data for each of the categories in each variable.

Module 38 further provides means for identifying near-zero-variables from the input data and removing or further processing the same. This involves checking of variables with no variations or close to zero variation in their observations. These variables are less important in the modelling and can be removed or further processed to make them useful. Users can define the cutting limits for regarding a variable as near-zero-variable, choose whether to remove the identified variable(s) or restructure the observations in the variables if removing them is considered harmful.

Provided that data partitioning is considered and defined in the module master at 43, in module 38 the input data is partitioned into level 1 trainset 13 and testset datasets 14 based on the partitioning ratio specified at module 43. If partitioning of data is not intended, the entire input data will be used for training with the assumption that separate unseen data is available for crop/grassland yield estimation.

Most of the MLAs implemented require tuning of several hyperparameters. In an embodiment of module 36 the default values for up to 100 MLA models are initially set wherein said default values are evaluated after intensive testing using different crops (e.g. corn, soybean, winter wheat, winter barely, silage maize, etc.) and grassland. The default hyperparameter tuning can be used to do initial training of the models. Alternatively, when there is a need to do further hyperparameter tuning, the default values can be changed for each of the hyperparameters. Since some of the MLAs have common hyperparameters, each of the MLA access/share the defined hyperparameters using functions that loop through the MLAs and the hyperparameters. Alternative to the manual hyperparameter tuning, tune length can be defined for automated hyperparameter tuning.

To speed-up processing, users can configure CPU parallel processing depending on the size of the datasets and complexity of the MLA models used for a particular task. Decision as to whether to use parallel processing or not as well as the number of processor cores to be used can be defined at the master module 43 by the user depending on the capacity of the machine available for the modelling. Alternatively, Graphics Processing Unit (GPU) processing is provided as an option particularly for deep learning MLA models enabling parallel computing through thousands of threads at a time using GPUs large number of simple cores.

The processes in hyperparameter tuning, model training/fitting, resampling and creating metamodels is controlled by the implementation of module 37. Module 37 provides functions for creating indices for resampling and K-folds for each of the model accuracy estimation methods defined by module master 43. Based on the number of hyperparameters tuned in the system, seeds can be generated by module 37 for each of the implemented MLA models. The controlling of overall modelling process is based on the calculated index and the seeds generated at 37 as well as the method for model evaluation, parallel processing and related settings specified by the user at the module master 43.

A concrete embodiment of the method and system is described in the following. The method and system uses ten L1 MLA models (RF, GBM, mxnet, SVM, cubist, PLS, SIMPLS, rpart, nnet and LASSO) and three L2 MLA models (glmboost, glm, and xgboost). The data used for this example are indices derived from remote
sensing data (NDVI, OSAVI, ARVI, CVI and DVI) and weather data (temperature, precipitation, duration of sunshine and evapotranspiration). At reference sign 6 of **Fig. 1** the raw input data containing q variables with r observations is prepared and loaded to the system. The number of variables q is equal to nine in this example, i.e. five RS indices and four variables for weather conditions. In compliance with reference signs 7 - 11 the raw input data is pre-processed, i.e. data cleansing, transformation, normalization, data mapping and outlier detection and treatment. At method step represented by reference sign 12 the processed data which is ready to be used for modelling contains i variables with z observations each. If no variables and/or observations were removed during the data processing, i and z will be the same as q and r respectively. Assuming that 70% of the data is used for training and 30% for testing, L1 Trainset 13 contains i variables with j observations that constitute 70% of the z observations created at step 12. The testset data 14 consists of i variables with t observations that constitute 30% of the z observations created at step 12.

In L1 training process 15 according to **Fig. 2****,** hyperparameters are tuned both for L1 MLA and L2 MLA models mentioned above. At step 16 the L1 Trainset data is resampled for use in repeated cross-validation while training the L1 MLA models 17. Reference sign 19 presents n trained and evaluated L1 MLA models producing n predictions as outputs of L1 training process. In this example n corresponds to the ten L1 MLA models (RF, GBM, mxnet, SVM, cubist, PLS, SIMPLS, rpart, nnet and LASSO). With the assumption that two of the L1 MLA models showed poor performance (e.g. PLS and nnet), the n-d L1 models to be selected are 10-2 L1 MLA models excluding these two poorly performing models where n is the total number of models and d the models to be excluded from the next step. Thus, L2 Trainset 21 contains eight models i.e. RF, GBM, mxnet, SVM, cubist, SIMPLS, rpart and LASSO, and their corresponding predictions produced during the L1 training process. The L2 Trainset 21 will be used as an input for training L2 models.

In L2 training process, L2 trainset data 21 produced are resampled in step 22 for use in repeated cross-validation while training the L2 models (glmboost, glm, and xgboost) at step 23. At step 25 m trained and evaluated L2 models are generated as outputs, wherein m in this case refers to 3 models i.e. glmboost, glm, and xgboost. In L2 testing process the L2 MLA models are evaluated for over-fitting/under-fitting by predicting on independent testset data 14. Assuming that xgboost showed the best performance among the three L2 MLA models, it will be selected as the final metamodel to be used for production (yield estimation) using unseen data 29 containing i variables and t observations.

The estimated results 31 contain yield values with their corresponding geographic location, timestamp and crop/grassland type for which yield was estimated. Provided that there is independent reference yield data for the particular geographic location(s), crop type(s) and time step(s), the estimated yield can be validated using a method provided at 33.

**Fig. 7** shows a clipping of a plurality of processed data 12 according to an embodiment. For better presentability, only two lines are shown. The plurality of processed data 12 comprises columns for an identification of the field 200, of a time-series of processed remote sensing data 210, comprising data 211 and 212, and an observed yield value 220. The identification of the field 200 may be used as a key to access the further columns of the list 12. There may be many more lines and columns in a real database for processed data 12.

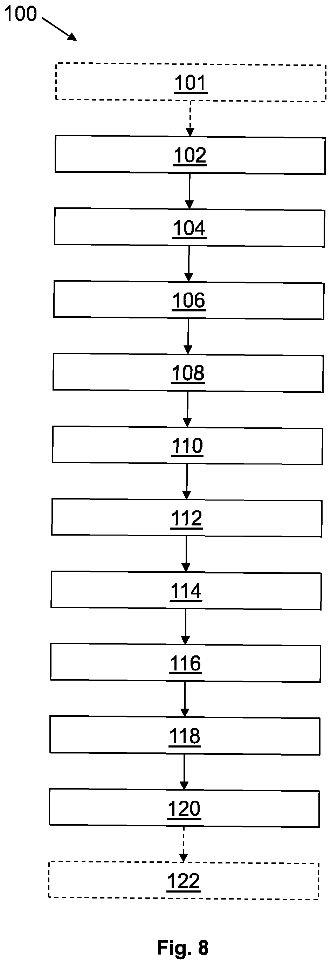

**Fig. 8** shows a method 100 according to an embodiment for determining a yield estimation of crops of a field 200. In a step 102 a plurality of processed data 12 (see **Fig. 1 - 7****)** of the field 200 is provided. Each entry of the plurality of processed data 12 comprises at least an identification of the field 200, a time-series of processed remote sensing data 210, and an observed yield value 220. In a step 104, the plurality of processed data 12 is partitioned into an L1 trainset 13 and an L1 testset 14, wherein the L1 trainset 13 and the L1 testset 14 comprise a disjoint subset of entries of the plurality of processed data 12.

In a step 106, each L1 model 19m.i of a plurality of L1 models 19 is trained based on the entries of the L1 trainset 13. In a step 108, for each trained L1 model 19m.i, an L1 predicted yield value 19p.i, based on the L1 trainset 13, is output. In a step 110, for each L1 model 19m.i, the L1 predicted yield values 19p.i of the L1 trainset 13 are compared to the observed yield values.

In a step 112, an L1 subset of L1 models 19m.i of the plurality of L1 models 19 is selected, wherein the selected L1 subset consists of L1 models 19m.i, whose L1 predicted yield values 19p.i differ from the observed yield values by less than a predefined L1 error value. In a step 114, each L2 model 25.i of a plurality of L2 models 25 is trained, based only on the L1 predicted yield values 19p.i that are output by the selected L1 subset of L1 models 19m.i. In a step 116, for each trained L2 model 25.i, an L2 predicted yield value is determined, based on a second set of L1 predicted yield values 19p.i, wherein the second set of L1 predicted yield values 19p.i are output by the selected L1 subset of L1 models 19m.i based on the L1 testset 14. In a step 118, an L2 subset of L2 models 25. i of the plurality of L2 models 25 is selected, wherein the selected L2 subset consists of L2 models 25.i, whose L2 predicted yield values 26 differ from the observed yield values by less than a predefined L2 error value.

In a step 120, the yield estimation of crops of the field 200 is determined, by applying the selected L1 subset of L1 models 19m.i and the selected L2 subset of L2 models 25.i on a time-series of unseen processed remote sensing data of the field 200.

In an optional step 122, the yield estimation of crops of the field is validated, by applying the selected L1 subset of L1 models 19m.i and the selected L2 subset of L2 models 25.i on a time-series of unseen processed reference data 32 of the field 200.

In an optional step 101, which may be performed before the step 102, a plurality of raw data 6 of a field 200 is processed, for generating a plurality of processed data 12 of the field 200.

## Claims

1. A computer-implemented method for determining a yield estimation of crops of a field (200), the method comprising the steps of:
providing a plurality of processed data (12) of the field (200), wherein each entry of the plurality of processed data (12) comprises at least:
an identification of the field (200),
a time-series of processed remote sensing data (210), and
an observed yield value (220);
partitioning the plurality of processed data (12) into an L1 trainset (13) and an L1 testset (14), wherein the L1 trainset (13) and the L1 testset (14) comprise a disjoint subset of entries of the plurality of processed data (12);
training each L1 model (19m.i) of a plurality of L1 models (19) based on the entries of the L1 trainset (13);
outputting, for each trained L1 model (19m.i), an L1 predicted yield value (19p.i), based on the L1 trainset (13);
comparing, for each L1 model (19m.i), the L1 predicted yield values (19p.i) of the L1 trainset (13) to the observed yield values (220);
selecting an L1 subset of L1 models (19m.i) of the plurality of L1 models (19),
wherein the selected L1 subset consists of L1 models (19m.i), whose L1 predicted yield values (19p.i) differ from the observed yield values (220) by less than a predefined L1 error value;
training each L2 model (25.i) of a plurality of L2 models (25) based, as input, only on the L1 predicted yield values (19p.i) that are output by the selected L1 subset of L1 models (19m.i),
wherein the training of at least one L1 model (19m.i) and/or the training of at least one L2 model (25.i) comprises a hyperparameter tuning,
wherein the training of at least one L1 model (19m.i) and/or the training of at least one L2 model (25.i) comprises to fulfil a stopping criterion for stopping the training, wherein the stopping criterion is one of:
having executed a predefined number of runs,
reaching of minimal convergence, and/or
reaching of minimal threshold of an error value;
determining, for each trained L2 model (25.i), an L2 predicted yield value, based on a second set of L1 predicted yield values (19p.i), wherein the second set of L1 predicted yield values (19p.i) are output by the selected L1 subset of L1 models (19m.i) based on the L1 testset (14),
wherein statistical measures are used as evaluation metrics for determining the differences for the L1 error value, the L2 error value, and/or the difference value;
selecting an L2 subset of L2 models (25.i) of the plurality of L2 models (25),
wherein the selected L2 subset consists of L2 models (25.i), whose L2 predicted yield values (26) differ from the observed yield values (220) by less than a predefined L2 error value;
determining the yield estimation of crops of the field (200), for planning the harvesting of the field (200), by applying the selected L1 subset of L1 models (19m.i) and the selected L2 subset of L2 models (25.i) on a time-series of unseen processed remote sensing data of the field (200).

2. The method of claim 1,
wherein the L1 predicted yield values (19p.i) differ from L1 predicted yield values of each of the other L1 models (19m.i) by at least a predefined difference value.

3. The method of claim 1 or 2,
wherein statistical measures that are used as evaluation metrics comprise MAE, RMSE, R².

4. The method of any one of the preceding claims, further comprising the step of:
validating the yield estimation of crops of the field (200), by applying the selected L1 subset of L1 models (19m.i) and the selected L2 subset of L2 models (25.i) on a time-series of unseen processed reference data (32) of the field (200).

5. The method of any one of the preceding claims,
wherein the time-series of processed remote sensing data comprises data from remote sensing data, particularly from NDVI, OSAVI, ARVI, CVI, DVI, and/or further data from optical satellites, from radar satellites, and/or from air-borne sensors.

6. The method of any one of the preceding claims, wherein the plurality of processed data (12) of the field (200) further comprises at least one of:
a crop variety,
a corresponding time-series of processed weather data,
processed soil data,
management practices, and/or
socio-economic factors,
data on damage factors,
and/or further data.

7. The method of any one of the preceding claims,
wherein the plurality of L1 models (19m) and/or the plurality of L2 models (25) comprises at least two of:
RF, GBM, mxnet, SVM, cubist, PLS, SIMPLS, rpart, nnet, LASSO, glmboost, glm, xgboost, and/or a further machine learning model.

8. The method of any one of the preceding claims, further comprising the step of
processing a plurality of raw data (6) of a field (200) for generating a plurality of processed data (12) of the field (200), wherein the step comprises:
providing the plurality of raw data (6) of the field (200), which comprise at least one of:
a time-series of raw remote sensing data from at least one satellite and/or airplane, wherein the time-series comprises remote sensing data of at least one fertilization period,
a time-series of corresponding raw weather data,
a list of at least one raw management practice,
a list of at least one raw soil data,
a list of at least one raw socio-economic factor,
a list of at least one raw vegetation index, and/or
a list of at least one raw derivative of vegetation indices;
cleaning the raw data (6);
mapping the raw data (6) to the field (200) and the time-series;
transforming the raw data (6) into a predefined format of the processed data (12).

9. A program element for executing the method of any one of the preceding claims, when running the program element on a processing unit.

10. A computer-readable storage medium where a computer program according to claim 9 is stored on.

11. A system for determining a yield estimation of crops of a field (200), the system comprising:
a database comprising a plurality of raw data (6) and/or a plurality of processed data (12), and
a processing unit for processing the plurality of raw data (6) and/or a plurality of processed data (12), and for controlling, running and/or evaluating a plurality of L1 models (19) and/or L2 models (25) according to any one of the claims 1 to 8.

12. Use of a system according to claim 11 or a method according to any one of claims 1 to 8 for determining a yield estimation of crops of a field (200) for planning the harvesting said field.

## Patentansprüche

1. Computer-implementiertes Verfahren zur Bestimmung einer Ertragsschätzung von Feldfrüchten (200), wobei das Verfahren die folgenden Schritte umfasst:
bereitstellen einer Vielzahl von verarbeiteten Daten (12) des Feldes (200), wobei jeder Eintrag der Vielzahl von verarbeiteten Daten (12) mindestens umfasst:
eine Identifizierung des Feldes (200),
eine Zeitreihe von verarbeiteten Fernerkundungsdaten (210), und
einen beobachteten Ertragswert (220);
aufteilen der Vielzahl von verarbeiteten Daten (12) in einen L1-Trainingssatz (13) und einen L1-Testsatz (14), wobei der L1-Trainingssatz (13) und der L1-Testsatz (14) eine disjunkte Teilmenge von Einträgen der Vielzahl von verarbeiteten Daten (12) umfassen;
trainieren jedes L1-Modells (19m.i) aus einer Vielzahl von L1-Modellen (19) auf der Grundlage der Einträge des L1-Trainingssatzs (13);
ausgeben, für jedes trainierte L1-Modell (19m.i), eines auf dem L1-Trainingssatz (13) basierenden L1-Vorhersageertragswerts (19p.i);
vergleichen, für jedes L1-Modell (19m.i), der vorhergesagten L1-Ertragswerte (19p.i) des L1-Trainingssatzes (13) mit den beobachteten Ertragswerten (220);
auswählen einer L1-Teilmenge von L1-Modellen (19m.i) aus der Vielzahl von L1-Modellen (19),
wobei die ausgewählte L1-Teilmenge aus L1-Modellen (19m.i) besteht, deren Vorhergesagte L1-Ertragswerte (19p.i) von den beobachteten Ertragswerten (220) um weniger als einen vordefinierten L1-Fehlerwert abweichen;
trainieren jedes L2-Modells (25.i) einer Vielzahl von L2-Modellen (25), das als Eingabe nur auf den vorhergesagten L1-Ertragswerten (19p.i) basiert, die von der ausgewählten L1-Untergruppe von L1-Modellen (19m.i) ausgegeben werden,
wobei das Trainieren mindestens eines L1-Modells (19m.i) und/oder das Trainieren mindestens eines L2-Modells (25.i) eine Hyperparameterabstimmung umfasst,
wobei das Trainieren mindestens eines L1-Modells (19m.i) und/oder das Trainieren mindestens eines L2-Modells (25.i) die Erfüllung eines Abbruchkriteriums zum Abbruch des Trainings umfasst, wobei das Abbruchkriterium eines der folgenden ist:
nachdem eine vordefinierte Anzahl von Läufen durchgeführt wurde,
Erreichen der minimalen Konvergenz, und/oder
Erreichen der Mindestschwelle eines Fehlerwertes;
bestimmen, für jedes trainierte L2-Modell (25.i), eines L2-Vorhersageertragswertes auf der Grundlage eines zweiten Satzes von L1-Vorhersageertragswerten (19p.i), wobei der zweite Satz von L1-Vorhersageertragswerten (19p.i) von dem ausgewählten L1-Teilsatz von L1-Modellen (19m.i) auf der Grundlage des L1-Testsatzes (14) ausgegeben wird,
wobei statistische Maße als Bewertungsmetriken zum Bestimmen der Unterschiede für den L1-Fehlerwert, den L2-Fehlerwert und/oder den Differenzwert verwendet werden;
auswählen einer L2-Teilmenge von L2-Modellen (25.i) aus der Vielzahl von L2-Modellen (25),
wobei die ausgewählte L2-Teilmenge aus L2-Modellen (25.i) besteht, deren L2-Vorhersageertragswerte (26) von den beobachteten Ertragswerten (220) um weniger als einen vordefinierten L2-Fehlerwert abweichen;
bestimmen der Ertragsschätzung von Feldfrüchten des Feldes (200) zum Planen des Erntens des Feldes (200), durch Anwenden der ausgewählten L1-Teilmenge von L1-Modellen (19m.i) und der ausgewählten L2-Teilmenge von L2-Modellen (25.i) auf eine Zeitreihe von ungesehenen verarbeiteten Fernerkundungsdaten des Feldes (200).

2. Verfahren nach Anspruch 1,
wobei die vorhergesagten L1-Ertragswerte (19p.i) von den vorhergesagten L1-Ertragswerten jedes der anderen L1-Modelle (19m.i) um mindestens einen vordefinierten Differenzwert abweichen.

3. Verfahren nach Anspruch 1 oder 2,
wobei statistische Maße, die als Bewertungsmetriken verwendet werden, MAE, RMSE, R² umfassen.

4. Verfahren nach einem der vorhergehenden Ansprüche, ferner umfassend den folgenden Schritt:
validieren der Ertragsschätzung der Kulturen des Feldes (200) durch Anwenden des ausgewählten L1-Teilsatzes von L1-Modellen (19m.i) und des ausgewählten L2-Teilsatzes von L2-Modellen (25.i) auf eine Zeitserie von ungesehenen verarbeiteten Referenzdaten (32) des Feldes (200).

5. Verfahren nach einem der vorhergehenden Ansprüche,
wobei die Zeitreihe der verarbeiteten Fernerkundungsdaten Daten von Fernerkundungsdaten, insbesondere von NDVI, OSAVI, ARVI, CVI, DVI, und/oder weitere Daten von optischen Satelliten, von Radarsatelliten und/oder von luftgestützten Sensoren umfasst.

6. Verfahren nach einem der vorhergehenden Ansprüche, wobei die Vielzahl der verarbeiteten Daten (12) des Feldes (200) weiterhin mindestens eines der folgenden Elemente umfasst:
eine Pflanzensorte,
eine entsprechende Zeitserie von verarbeiteten Wetterdaten,
verarbeitete Bodendaten,
Bewirtschaftungsmethoden, und/oder
sozioökonomische Faktoren,
Daten über Schadensfaktoren,
und/oder weitere Daten.

7. Verfahren nach einem der vorhergehenden Ansprüche,
wobei die Vielzahl der L1-Modelle (19m) und/oder die Vielzahl der L2-Modelle (25) mindestens zwei von folgenden umfasst:
RF, GBM, mxnet, SVM, cubist, PLS, SIMPLS, rpart, nnet, LASSO, glmboost, glm, xgboost und/oder ein weiteres maschinelles Lernmodell.

8. Verfahren nach einem der vorhergehenden Ansprüche, ferner umfassend den folgenden Schritt:
verarbeiten einer Vielzahl von Rohdaten (6) eines Feldes (200) zum Erzeugen einer Vielzahl von verarbeiteten Daten (12) des Feldes (200), wobei der Schritt umfasst:
bereitstellen der Vielzahl von Rohdaten (6) des Feldes (200), die mindestens eines der folgenden Elemente umfassen:
eine Zeitreihe von Fernerkundungsrohdaten von mindestens einem Satelliten und/oder Flugzeug, wobei die Zeitreihe Fernerkundungsdaten von mindestens einer Düngeperiode umfasst,
eine Zeitreihe von entsprechenden Wetterrohdaten,
eine Liste mit mindestens einer rohen Bewirtschaftungsmethode,
eine Liste mit mindestens einem Bodenrohdatenwert,
eine Liste mit mindestens einem rohen sozioökonomischen Faktor,
eine Liste von mindestens einem Rohvegetationsindex, und/oder
eine Liste mit mindestens einer Rohableitung von Vegetationsindizes;
bereinigen der Rohdaten (6);
abbilden der Rohdaten (6) auf das Feld (200) und die Zeitserie;
umwandeln der Rohdaten (6) in ein vordefiniertes Format der verarbeiteten Daten (12).

9. Programmelement zum Ausführen des Verfahrens nach einem der vorhergehenden Ansprüche, wenn das Programmelement auf einer Verarbeitungseinheit ausgeführt wird.

10. Computerlesbares Speichermedium, auf dem ein Computerprogramm nach Anspruch 9 gespeichert ist.

11. System zur Bestimmung einer Ertragsschätzung von Feldfrüchten (200), wobei das System Folgendes umfasst:
eine Datenbank, die eine Vielzahl von Rohdaten (6) und/oder eine Vielzahl von verarbeiteten Daten (12) umfasst, und
eine Verarbeitungseinheit zur Verarbeitung der Vielzahl von Rohdaten (6) und/oder einer Vielzahl von verarbeiteten Daten (12) und zur Steuerung, Ausführung und/oder Auswertung einer Vielzahl von L1-Modellen (19) und/oder L2-Modellen (25) nach einem der Ansprüche 1 bis 8.

12. Verwendung eines Systems nach Anspruch 11 oder eines Verfahrens nach einem der Ansprüche 1 bis 8 zur Ermittlung einer Ertragsschätzung von Feldfrüchten eines Feldes (200) zur Planung des Erntens dieses Feldes.

## Revendications

1. Procédé mis en œuvre par ordinateur pour déterminer une estimation de rendement de cultures d'un champ (200), le procédé comprenant les étapes consistant à :
fournir une pluralité de données traitées (12) du champ (200), dans lequel chaque entrée de la pluralité de données traitées (12) comprend au moins :
une identification du champ (200),
une série chronologique de données de télédétection traitées (210), et
une valeur de rendement observé (220) ;
diviser la pluralité de données traitées (12) en un ensemble d'apprentissage L1 (13) et un ensemble de test L1 (14), dans lequel l'ensemble d'apprentissage L1 (13) et l'ensemble de test L1 (14) comprennent un sous-ensemble disjoint d'entrées de la pluralité de données traitées (12) ;
entraîner chaque modèle L1 (19m.i) d'une pluralité de modèles L1 (19) sur la base des entrées de l'ensemble d'apprentissage L1 (13) ;
sortir, pour chaque modèle L1 entraîné (19m.i), une valeur de rendement prédit L1 (19p.i), sur la base de l'ensemble d'apprentissage L1 (13) ;
comparer, pour chaque modèle L1 (19m.i), les valeurs de rendement prédit (19p.i) de l'ensemble d'apprentissage L1 (13) aux valeurs de rendement observé (220) ;
sélectionner un sous-ensemble L1 de modèles L1 (19m.i) de la pluralité de modèles L1 (19),
dans lequel le sous-ensemble L1 sélectionné est constitué de modèles L1 (19m.i), dont les valeurs de rendement prédit (19p.i) diffèrent des valeurs de rendement observé (220) de moins d'une valeur d'erreur L1 prédéfinie ;
entraîner chaque modèle L2 (25).i) d'une pluralité de modèles L2 (25) sur la base, en entrée, uniquement des valeurs de rendement prédit L1 (19p.i) qui sont sorties par le sous-ensemble L1 sélectionné de modèles L1 (19m.i),
dans lequel l'entraînement d'au moins un modèle L1 (19m.i) et/ou l'entraînement d'au moins un modèle L2 (25.i) comprend un réglage des hyperparamètres,
dans lequel l'entraînement d'au moins un modèle L1 (19m.i) et/ou l'entraînement d'au moins un modèle L2 (25.i) comprend de satisfaire à un critère d'arrêt pour arrêter l'entraînement, dans lequel le critère d'arrêt est un élément parmi :
avoir exécuté un nombre prédéfini de passages,
atteindre une convergence minimale et/ou
atteindre un seuil minimal d'une valeur d'erreur ;
déterminer, pour chaque modèle L2 entraîné (25.i), une valeur de rendement prédit L2, sur la base d'un second ensemble de valeurs de rendement prédit L1 (19p.i), dans lequel le second ensemble de valeurs de rendement prédit L1 (19p.i) est sorti par le sous-ensemble L1 sélectionné de modèles L1 (19m.i) sur la base de l'ensemble de test L1 (14),
dans lequel des mesures statistiques sont utilisées comme des indicateurs d'évaluation pour déterminer les différences pour la valeur d'erreur L1, la valeur d'erreur L2 et/ou la valeur de différence ;
sélectionner un sous-ensemble L2 de modèles L2 (25.i) de la pluralité de modèles L2 (25),
dans lequel le sous-ensemble L2 sélectionné est constitué de modèles L2 (25.i), dont les valeurs de rendement prédit L2 (26) diffèrent des valeurs de rendement observé (220) de moins d'une valeur d'erreur L2 prédéfinie ;
déterminer l'estimation de rendement de cultures du champ (200), pour planifier la récolte du champ (200), en appliquant le sous-ensemble L1 sélectionné de modèles L1 (19m.i) et le sous-ensemble L2 sélectionné de modèles L2 (25.i) sur une série chronologique de données de télédétection traitées non vues du champ (200).

2. Procédé selon la revendication 1,
dans lequel les valeurs de rendement prédit L1 (19p.i) diffèrent des valeurs de rendement prédit L1 de chacun des autres modèles L1 (19m.i) d'au moins une valeur de différence prédéfinie.

3. Procédé selon la revendication 1 ou 2,
dans lequel des mesures statistiques qui sont utilisées comme indicateurs d'évaluation comprennent MAE, RMSE, R².

4. Procédé selon l'une quelconque des revendications précédentes, comprenant en outre l'étape consistant à :
valider l'estimation de rendement de cultures du champ (200), en appliquant le sous-ensemble L1 sélectionné de modèles L1 (19m.i) et le sous-ensemble L2 sélectionné de modèles L2 (25.i) sur une série chronologique de données de référence traitées non vues (32) du champ (200).

5. Procédé selon l'une quelconque des revendications précédentes,
dans lequel la série chronologique de données de télédétection traitées comprend des données provenant de données de télédétection, en particulier de NDVI, OSAVI, ARVI, CVI, DVI et/ou de données supplémentaires provenant de satellites optiques, de satellites radar et/ou de capteurs aéroportés.

6. Procédé selon l'une quelconque des revendications précédentes, dans lequel la pluralité de données traitées (12) du champ (200) comprend en outre au moins un parmi :
une variété de culture,
une série chronologique correspondante de données météorologiques traitées,
des données de sol traitées,
des pratiques de gestion et/ou
des facteurs socio-économiques,
des données sur des facteurs de dommage,
et/ou des données supplémentaires.

7. Procédé selon l'une quelconque des revendications précédentes,
dans lequel la pluralité de modèles L1 (19m) et/ou la pluralité de modèles L2 (25) comprend au moins deux parmi :
RF, GBM, mxnet, SVM, cubist, PLS, SIMPLS, rpart, nnet, LASSO, glmboost, glm, xgboost et/ou un modèle d'apprentissage automatique supplémentaire.

8. Procédé selon l'une quelconque des revendications précédentes, comprenant en outre l'étape consistant à :
traiter une pluralité de données brutes (6) d'un champ (200) pour générer une pluralité de données traitées (12) du champ (200), dans lequel l'étape comprend de :
fournir la pluralité de données brutes (6) du champ (200), qui comprennent au moins un parmi :
une série chronologique de données de télédétection brutes provenant d'au moins un satellite et/ou avion, dans lequel la série chronologique comprend des données de télédétection d'au moins une période de fertilisation,
une série chronologique de données météorologiques brutes correspondantes,
une liste d'au moins une pratique de gestion brute,
une liste d'au moins une donnée de sol brute,
une liste d'au moins un facteur socio-économique brut, une liste d'au moins un indice de végétation brut, et/ou
une liste d'au moins un dérivé brut d'indices de végétation ;
nettoyer les données brutes (6) ;
mapper les données brutes (6) au champ (200) et à la série chronologique ;
transformer les données brutes (6) dans un format prédéfini des données traitées (12).

9. Élément de programme destiné à exécuter le procédé de l'une quelconque des revendications précédentes, lors du lancement de l'élément de programme sur une unité de traitement.

10. Support de stockage lisible par ordinateur sur lequel est stocké un programme informatique selon la revendication 9.

11. Système pour déterminer une estimation de rendement de cultures d'un champ (200), le système comprenant :
une base de données comprenant une pluralité de données brutes (6) et/ou une pluralité de données traitées (12), et
une unité de traitement pour traiter la pluralité de données brutes (6) et/ou une pluralité de données traitées (12) et pour commander, lancer et/ou évaluer une pluralité de modèles L1 (19) et/ou de modèles L2 (25) selon l'une quelconque des revendications 1 à 8.

12. Utilisation d'un système selon la revendication 11 ou d'un procédé selon l'une quelconque des revendications 1 à 8 pour déterminer une estimation de rendement de cultures d'un champ (200) pour planifier la récolte dudit champ.
